# EUROPEAN PATENT APPLICATION

(11) **EP 3 534 572 A1**
(43) Date of publication of application: **04.09.2019**
(21) Application number: 19158233.7
(22) Date of filing: 20.02.2019
(51) Int. Cl.: H04L 12/46

(54) **RELAY SERVER**

(30) Priority: 02.03.2018 JP 2018037249
(71) Applicant: Murata Machinery, Ltd., Kyoto-shi, Kyoto 601-8326 (JP)
(72) Inventor: TANIMOTO, Yoshifumi, Kyoto, 612-8686 (JP)
(74) Representative: Stöckeler, Ferdinand

(57) **Abstract**

Provided is a relay server that efficiently and appropriately relays communication between devices. The relay server includes a network interface, a storage device, and a control unit. The network interface communicates with a user terminal and a device. The storage device stores login information. When the user terminal performs a login, the control unit transmits, to the user terminal, a device list including an identified sub ID. Further, when receiving a connection request from the user terminal, the control unit establishes, when a device to which a connection is requested is logged in, a communication session between the device and the user terminal. Further, when the device to which a connection is requested is not logged in, the control unit causes the device to log in and, after the device is logged in, establishes a communication session between the device and the user terminal.

## Description

### [CROSS-REFERENCE TO RELATED APPLICATIONS]

This application claims priority under 35 U.S.C. 119 to Japanese Patent Application No. 2018-037249, filed on March 2, 2018, which application is hereby incorporated by reference in its entirety.

### BACKGROUND OF THE INVENTION

### 1. Field of the Invention

The present invention relates to a relay server that relays communication between devices included in a system.

### 2. Description of the Related Art

Conventionally, a relay server that relays communication between each of a plurality of devices included in a predetermined system and an external user terminal is known. For example, USP9,762,756 discloses a management server and a gateway that relay communication between each of a plurality of multi-functional peripherals (MFPs) in a LAN and a user terminal such as a client.

### BRIEF SUMMARY OF THE INVENTION

In the conventional system as described above, the plurality of devices included in the system are connected to the relay server all the time. With such a configuration, when the number of devices included in the system becomes large, a large number of devices are logged in to the relay server all the time, resulting in an increase in a process load on the relay server, which causes the relay process between each of the devices and the user terminal to be delayed.

Further, the conventional relay server does not impose limitations on the devices with which the user terminal is able to communicate, which cannot prevent the user terminal on which a chat service is in operation from mistakenly connecting to a device incapable of executing the chat service, for example.

It is an object of the present invention to provide a relay server that efficiently and appropriately relays communication between each of a plurality of devices in a system and a user terminal.

Hereinafter, a plurality of aspects for solving the problems will be described. These aspects may be optionally combined as necessary.

The relay server includes a network interface, a storage device, and a control unit. The network interface communicates with a user terminal and a to-be-connected device. The storage device stores login information. The login information is information in which a user ID, a user type to which the user ID belongs, and a device ID of the to-be-connected device belonging to the user type are stored in association with each other.

When the user terminal performs a login, the control unit identifies the user type to which the user ID used for the login belongs and the device ID belonging to the user type with reference to the login information, and transmits a list including the device ID thus identified to the user terminal that is logged in.

Further, when receiving selection of the device ID from the user terminal, the control unit establishes, when the to-be-connected device is logged in with the device ID selected on the user terminal, a communication session between the to-be-connected device that is logged in and the user terminal that is logged in.

On the other hand, when the to-be-connected device is not logged in with the device ID selected on the user terminal, the control unit causes the to-be-connected device to log in and, after the to-be-connected device is logged in, establishes a communication session between the to-be-connected device and the user terminal that is logged in.

In the relay server described above, at the start of the relay of communication between the user terminal and the to-be-connected device, the control unit transmits, to the user terminal, a list of device IDs of to-be-connected devices that are able to communicate with the user terminal.

This causes a user using the user terminal to select one from the device IDs displayed, thereby preventing the user from connecting an unrelated or inappropriate device and the user terminal.

Further, in the relay server, the control unit establishes, when the device ID is selected, that is, only when there is a request to communicate with a predetermined to-be-connected device using the user terminal, a communication session between the to-be-connected device and the user terminal.

On the other hand, when the to-be-connected device that desires to establish a communication session is not logged in to the relay server, the control unit causes the to-be-connected device to log in and, after the to-be-connected device is logged in, establishes a communication session.

As described above, the relay server prevents a to-be-connected device that need not communicate with the user terminal from logging into the relay server, which makes it possible to minimize the number of to-be-connected devices that remain logged in. As a result, the load of the relay process on the relay server can be reduced.

When the device ID of the to-be-connected device that is not logged in is selected on the user terminal, the control unit may transmit, to the gateway device to which the to-be-connected device is connected, a login request signal that causes the to-be-connected device to log in.

This allows the relay server to cause the gateway device to request the to-be-connected device to log in.

The control unit may receive information on the to-be-connected device connected to the gateway device from the gateway device and update the login information when the to-be-connected device connected to the gateway device changes.

This allows the relay server to reflect the latest connection state of the device with respect to the gateway device in the login information.

The above relay server can efficiently and appropriately relay communication between each of a large number of devices in the system and a user terminal.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram illustrating an example of an overall configuration of a communication system;
FIG. 2 is a diagram illustrating a configuration of an automated warehouse system;
FIG. 3 is a diagram illustrating a configuration of a maintenance base;
FIG. 4 is a diagram illustrating a hardware configuration of a relay server;
FIG. 5A is a diagram illustrating an example of a data configuration of a first device list;
FIG. 5B is a diagram illustrating an example of a data configuration of a second device list;
FIG. 6 is a diagram illustrating an example of a data configuration of a login-permitted device list;
FIG. 7 is a diagram illustrating an example of a data configuration of login information;
FIG. 8 is a flowchart illustrating a login process;
FIG. 9 is a flowchart illustrating a process of transmitting a device list;
FIG. 10A is a diagram illustrating an example of a device list prepared for a user terminal;
FIG. 10B is a diagram illustrating an example of a device list prepared for a gateway device;
FIG. 11 is a flowchart illustrating a process of establishing a communication session between user terminals;
FIG. 12 is a flowchart illustrating a process of establishing a communication session between a user terminal, and a camera or a sensor;
FIG. 13 is a flowchart illustrating a process of establishing a communication session between gateway devices;
FIG. 14 is a flowchart illustrating a process of relaying data transmission and reception over a communication session;
FIG. 15 is a flowchart illustrating a process of monitoring a communication session;
FIG. 16 is a flowchart illustrating a logout process; and
FIG. 17 is a flowchart illustrating a process of monitoring an update on the device list.

### DETAILED DESCRIPTION OF PREFERRED EMBODIMENTS

### 1. First embodiment

### (1) Overall configuration of communication system

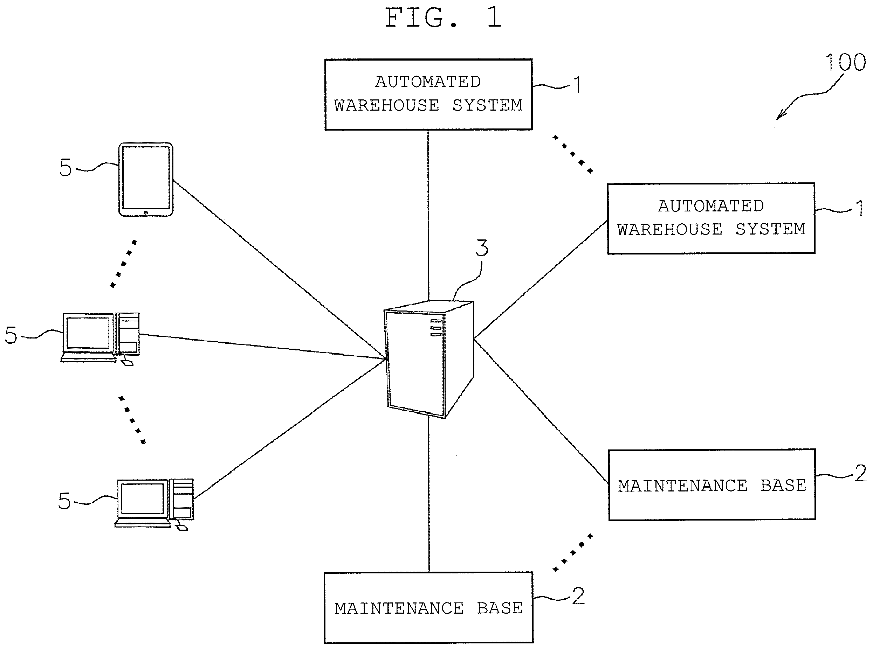

Hereinafter, an overall configuration of a communication system 100 according to a first embodiment will be described with reference to FIG. 1. FIG. 1 is a diagram illustrating an example of the overall configuration of the communication system.

The communication system 100 according to the first embodiment is a system in which automated warehouses provided at a plurality of locations are maintained and managed from various terminals. Specifically, the communication system 100 includes an automated warehouse system 1, a maintenance base 2, a relay server 3, and a user terminal 5.

The automated warehouse system 1 is a system that is disposed in a distribution center or the like and used for receiving and delivering goods, for example.

The maintenance base 2 is provided at a base where a person in charge of maintenance and the like of the automated warehouse system 1 is stationed and includes terminals (maintenance terminals 21a, 21b) used for maintenance of the automated warehouse system 1, for example.

The relay server 3 is a server that relays and manages communication among the automated warehouse system 1, the maintenance base 2, and/or the user terminal 5.

The user terminal 5 is a terminal such as a personal computer or a tablet terminal, for example.

A user uses the user terminal 5 to log in to the relay server 3, which allows the user to make a video chat with a user using another user terminal 5. Further, the user can check, using the user terminal 5 logged in to the relay server 3, image data acquired by a camera (to be described later) and measurement data acquired by a sensor, the camera and the sensor being installed in the automated warehouse system 1.

Note that, in the communication system 100 according to the present embodiment, transmission and reception of commands and the like among the user terminal 5, a gateway device (to be described later), the camera and the sensor of the automated warehouse system 1, and the relay server 3 are performed based on, for example, WebSocket protocol.

Further, after establishing a communication session between the camera and the sensor of the automated warehouse system 1, and the user terminal 5, data (image data, measurement data) is acquired from the camera and the sensor to the user terminal 5 via Web Real-Time Communication (WebRTC).

### (2) Automated warehouse system

### (2-1) Automated warehouse

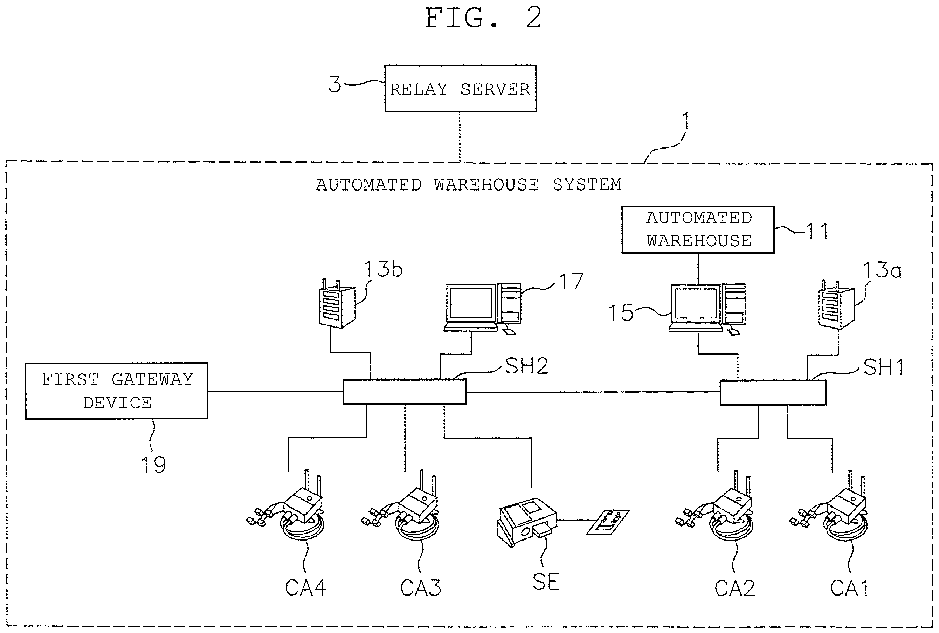

Hereinafter, with reference to FIG. 2, a specific configuration of the automated warehouse system 1 included in the communication system 100 will be described. FIG. 2 is a diagram illustrating the configuration of the automated warehouse system.

The automated warehouse system 1 includes an automated warehouse 11. The automated warehouse 11 includes a rack, a stacker crane, a conveyor, and the like, and performs reception, delivery, transfer, storage, and the like of goods.

In the present embodiment, the stacker crane and the conveyor of the automated warehouse 11 are provided with, for example, cameras CA1 to CA4 (an example of a to-be-connected device) capable of capturing a still image and a moving image having a length of a predetermined time, which makes it possible to acquire respective states of the stacker crane and the conveyor as visual information. The cameras CA1 to CA4 are, for example, fisheye cameras.

Further, the stacker crane is provided with a sensor SE (an example of the to-be-connected device) that measures a predetermined physical quantity, which makes it possible to measure, when a load collapse or the like occurs on the stacker crane, magnitude of vibration and/or sound generated by the load collapse. Examples of such a sensor SE include an acceleration sensor, a sound sensor, and the like.

Further, in the vicinity of the automated warehouse 11, a sensor SE (for example, a temperature and humidity sensor) that measures ambient temperature and humidity is provided.

Note that, in the automated warehouse system 1 illustrated in FIG. 2, four cameras CA1 to CA4 and one sensor SE are provided, but the number of cameras and sensors provided in the automated warehouse 11 is not limited to the above number and may be optionally determined based on a size of the automated warehouse system 1 or the like.

### (2-2) Network configuration of automated warehouse system

Hereinafter, a network configuration for allowing the devices to communicate with each other in the automated warehouse system 1 will be described.

The network configuration of the automated warehouse system 1 includes a first switching hub SH1. As illustrated in FIG. 2, the first switching hub SH1 connects the cameras CA1, CA2 and a first external storage device 13a. The first external storage device 13a is, for example, a network attached storage (NAS) device and stores image data acquired by the cameras CA1, CA2.

Further, the first switching hub SH1 connects the transport management server 15. The transport management server 15 is a computer system including a CPU, a storage device (a RAM, a ROM, an SSD, a hard disk, or the like), and various interfaces such as a network interface and is capable of communicating with the stacker crane, the conveyor, and the like of the automated warehouse 11.

The transport management server 15 controls the stacker crane and the conveyor provided in the automated warehouse 11 to control and manage reception and delivery of goods to and from the automated warehouse 11.

The network configuration of the automated warehouse system 1 includes a second switching hub SH2. The second switching hub SH2 connects the cameras CA3, CA4, the sensor SE, and a second external storage device 13b. The second external storage device 13b is, for example, a NAS device and stores image data acquired by the cameras CA3, CA4 and measurement data acquired by the sensor SE.

The second switching hub SH2 is also connected to the first switching hub SH1, which makes it possible to store the image data acquired by the cameras CA1, CA2 in the second external storage device 13b and to store the image data acquired by the cameras CA3, CA4 and the data acquired by the sensor SE in the first external storage device 13a.

Further, the second switching hub SH2 connects an information management server 17. The information management server 17 is a computer system including a CPU, a storage device (a RAM, a ROM, an SSD, a hard disk, or the like), and various interfaces such as a network interface and manages various data stored in the first external storage device 13a and the second external storage device 13b (for example, the data acquired by the cameras CA1 to CA4 and the sensor SE). The information management server 17 acquires information managed by the transport management server 15 as necessary.

The network configuration of the automated warehouse system 1 includes a first gateway device 19. The first gateway device 19 is a computer system including a CPU, a storage device (a RAM, a ROM, an SSD, a hard disk, or the like), and various interfaces such as a network interface. Further, the first gateway device 19 may be hardware in which some or all of its functions are implemented by an SoC or the like.

The first gateway device 19 is connected to the second switching hub SH2 and an external network (for example, a wide area network (WAN)) and relays communication between each of the devices in the network configuration of the automated warehouse system 1 and the outside.

Further, the first gateway device 19 has a first device list EL1 stored in its storage device. The first device list EL1 is information used for managing each of the devices included in the automated warehouse system 1 and connected to the first gateway device 19.

As will be described later, when establishing a communication session with the other gateway device (for example, a second gateway device 23), the first gateway device 19 transmits the first device list EL1 to the other gateway device.

The first gateway device 19 transmits, to the relay server 3, a list (referred to as "login-permitted device list EL3") of devices that have sub IDs and are permitted to log in to the relay server 3 among the devices connected to the first gateway device 19.

Further, the first gateway device 19 checks a connection state of each of the devices in the network configuration of the automated warehouse system 1 at predetermined time intervals. When there is a change in the connection state of the device, the first gateway device 19 updates a corresponding record in the first device list EL1. During the check, when the connection state of the device having the sub ID has changed, the first gateway device 19 notifies the relay server 3 that the connection state of the device having the sub ID has changed.

This allows the relay server 3 to save the login-permitted device list EL3 showing the latest connection state.

As will be described later, IP addresses of "192.168.0.*" are assigned to the devices listed in the first device list EL1, and an IP address of "192.168.0.*" is also assigned to the first gateway device 19 that belongs to the same LAN as the devices belong. At the same time, a global address used for establishing connection to an external network is assigned to the first gateway device 19.

Note that the above "*" is a so-called "wild card" and represents any number (an integer from 1 to 255).

Note that, in the network configuration illustrated in FIG. 2, the cameras CA1 to CA4 and the sensor SE are capable of directly communicating with the relay server 3. In such a configuration, the first gateway device 19 may serve as a default gateway to relay communication between the cameras CA1 to CA4 and the sensor SE, and the relay server 3.

### (3) Maintenance base

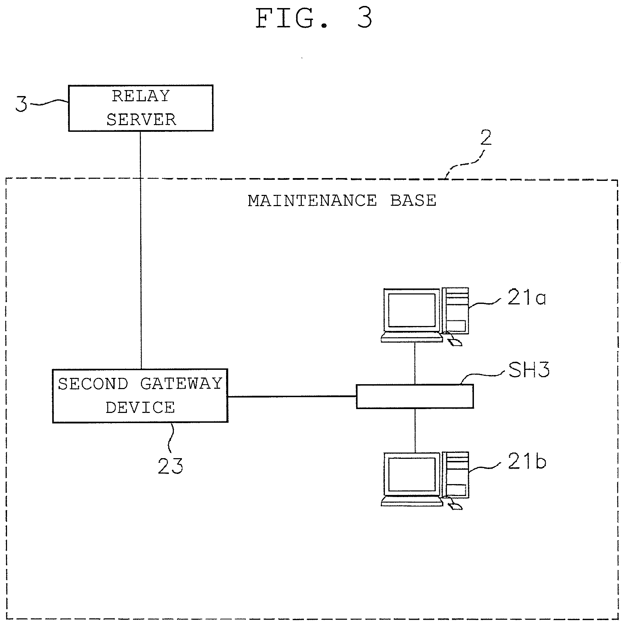

Hereinafter, with reference to FIG. 3, a specific configuration of the maintenance base 2 included in the communication system 100 will be described. FIG. 3 is a diagram illustrating the configuration of the maintenance base.

The maintenance base 2 includes the maintenance terminals 21a, 21b. The maintenance terminals 21a, 21b are connected to a third switching hub SH3. The maintenance terminals 21a, 21b are, for example, personal computers and are each used by a maintenance person in maintenance of the above devices and the like of the automated warehouse system 1.

The maintenance base 2 includes the second gateway device 23. The second gateway device 23 is a computer system including a CPU, a storage device (a RAM, a ROM, an SSD, a hard disk, or the like), and various interfaces such as a network interface. Further, the second gateway device 23 may be hardware in which some or all of its functions are implemented by an SoC or the like.

The second gateway device 23 is connected to the third switching hub SH3 and an external network and relays communication between the maintenance terminals 21a, 21b and the outside.

The second gateway device 23 has a second device list EL2 stored in its storage device. The second device list EL2 is information used for managing the maintenance terminals 21a, 21b that are permitted to connect to the second gateway device 23. As will be described later, when establishing a communication session with the other gateway device (for example, the first gateway device 19), the second gateway device 23 transmits the second device list EL2 to the other gateway device.

As will be described later, IP addresses of "172.28.0.*" are assigned to the maintenance terminals 21a, 21b listed in the second device list EL2, and an IP address of "172.28.0.*" is also assigned to the second gateway device 23 that belongs to the same LAN as the maintenance terminals 21a, 21b belong. At the same time, a global address used for establishing connection to the external network is assigned to the second gateway device 23.

### (4) Relay server

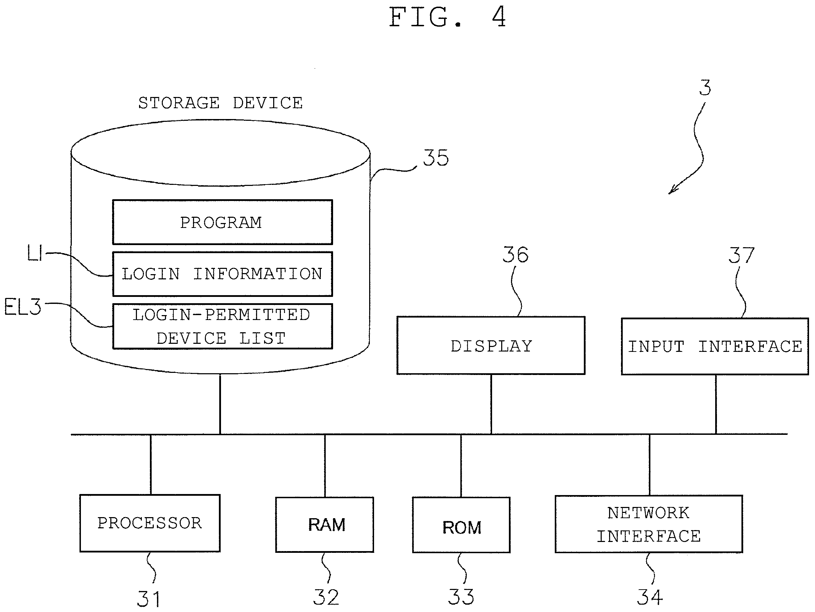

Hereinafter, a specific hardware configuration of the relay server 3 included in the communication system 100 will be described with reference to FIG. 4. FIG. 4 is a diagram illustrating the hardware configuration of the relay server.

As illustrated in FIG. 4, the relay server 3 is a computer system including a processor 31, a RAM 32, a ROM 33, a network interface 34, and a storage device 35.

The processor 31 is a CPU, or an SoC that results from integrating a CPU and various interfaces into one chip. The processor 31 executes a program stored in the storage device 35 or the like to execute various kinds of information processing in the relay server 3.

The RAM 32 temporarily stores necessary information such as a program stored in the storage device 35. The ROM 33 stores a program, settings, and the like used for controlling the relay server 3.

The network interface 34 communicates with an external terminal and/or device. The network interface 34 is, for example, an Ethernet (registered trademark) card that communicates with an external terminal and/or device by wire, and/or a wireless LAN interface that communicates with an external terminal and/or device by radio.

The storage device 35 is, for example, a storage device such as a hard disk or an SSD that stores a program to be executed on the relay server 3, login information LI, and the login-permitted device list EL3. The storage device 35 further stores a configuration file that contains settings necessary for making the relay server 3 work, and the like.

The login information LI is information used for managing the user ID used for logging in to the relay server 3. The login-permitted device list EL3 is a list of devices that are permitted to log in to the relay server 3, that is, devices having the sub IDs, among the device lists managed by the gateway devices.

In another embodiment, the relay server 3 may include a display 36. The display 36 is a display such as a liquid crystal display or an organic EL display on which various information on the relay server 3 is displayed. This allows the user to manage the relay server 3 while referring to information displayed on the display 36, for example.

In another embodiment, the relay server 3 may include an input interface 37 that receives an input from the user. The input interface 37 is, for example, an input device such as a keyboard, a mouse, or a touch panel. This allows the user to directly manage the relay server 3 using the input interface 37.

It should be noted that the user can manage the relay server 3 using any terminal capable of accessing the relay server 3 via the network interface 34 while referring to the information on the relay server 3, even without the input interface 37 and/or the display 36 described above.

### (5) Information managed in communication system

### (5-1) Device list

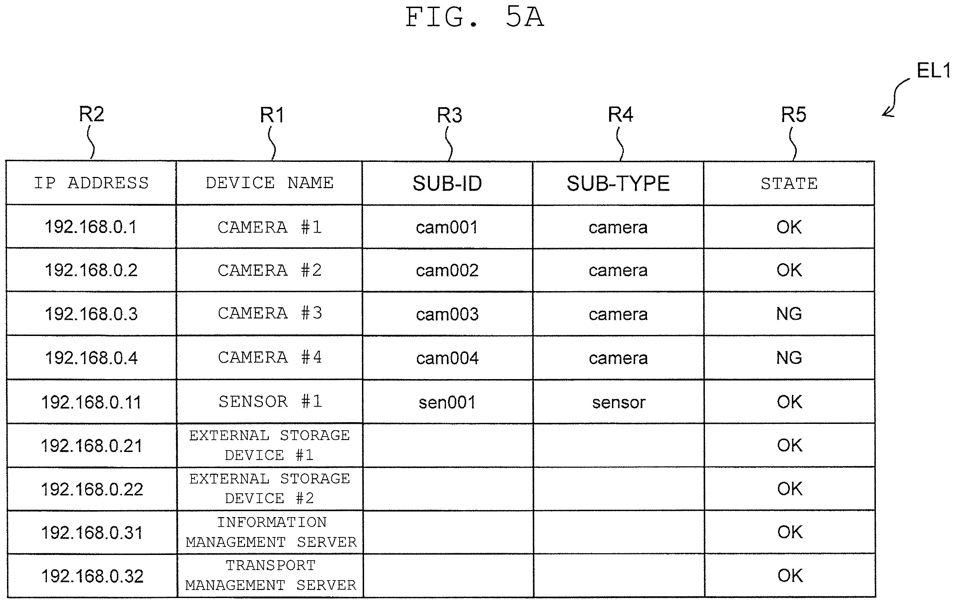

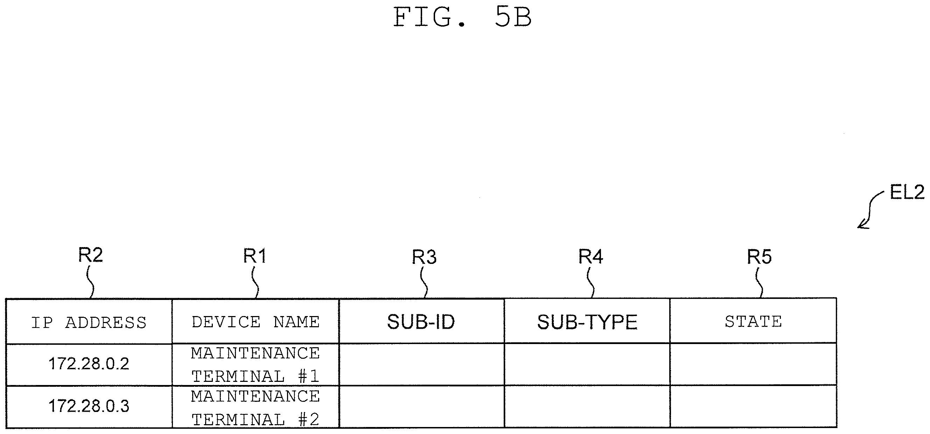

Specific data configurations of the device lists and the login information LI stored in the relay server 3, the first gateway device 19, and the second gateway device 23 will be described below. First, with reference to FIGS. 5A and 5B, data configurations of the device lists stored in the gateway devices will be described. FIG. 5A is a diagram illustrating an example of the data configuration of the first device list. FIG. 5B is a diagram illustrating an example of the data configuration of the second device list.

Such device lists are information used for managing devices connected to the gateway devices. Specifically, as illustrated in FIGS. 5A and 5B, the device lists each include a device name record section R1, an address record section R2, a sub ID record section R3, a subtype record section R4, and a state record section R5.

In the device name record section R1, a device name is recorded.

In the device name record section R1 of the first device list EL1 managed by the first gateway device 19, as illustrated in FIG. 5A, names of the cameras CA1 to CA4 (camera #1 to camera #4), a name of the sensor SE (sensor #1), a name of the first external storage device 13a (external storage device #1), a name of the second external storage device 13b (external storage device #2), a name of the information management server 17 (information management server), a name of the transport management server 15 (transport management server) are recorded.

On the other hand, in the device name record section R1 of the second device list EL2 managed by the second gateway device 23, as illustrated in FIG. 5B, a name of the maintenance terminal 21a (maintenance terminal #1) and a name of the maintenance terminal 21b (maintenance terminal #2) are recorded.

In the address record section R2, a network address assigned to a device permitted to connect to the gateway device.

In the address record section R2 of the first device list EL1, as illustrated in FIG. 5A, IP addresses of "192.168.0.1" to "192.168.0.4" are recorded in rows having the device names of the cameras #1 to #4, respectively. Further, an IP address of "192.168.0.11" is recorded in a row having the device name of the sensor #1.

Further, IP addresses of "192.168.0.21" and "192.168.0.22" are recorded in rows having the device names of the external storage device #1 and external storage device # 2, respectively.

Further, IP addresses of "192.168.0.31" and "192.168.0.32" are recorded in rows having the device names of the information management server and transport management server, respectively.

That is, in the automated warehouse system 1 of the present embodiment, the IP addresses of "192.168.0.1" to "192.168.0.4" are assigned to the cameras CA1 to CA4, respectively, and the IP address of "192.168.0.11" is assigned to the sensor SE.

Further, the IP addresses of "192.168.0.21" and "192.168.0.22" are assigned to the first external storage device 13a and the second external storage device 13b, respectively, and the IP addresses of "192.168.0.31" and "192.168.0.32" are assigned to the information management server 17 and the transport management server 15, respectively.

On the other hand, in the address record section R2 of the second device list EL2, as illustrated in FIG. 5B, IP addresses of "172.28.0.2" and "172.28.0.3" are recorded in rows having the device names of the maintenance terminals #1 and # 2, respectively.

That is, in the maintenance base 2 of the present embodiment, the IP addresses of "172.28.0.2" and "172.28.0.3" are assigned to the maintenance terminals 21a, 21b, respectively.

As will be described later, the IP addresses recorded in the address record section R2 are used when a communication session is established between the gateway devices and the devices connected to the gateway devices communicate with each other via the gateway devices.

In the sub ID record section R3, a login ID (sub ID) used by a device to log in to the relay server 3 is recorded.

In the first device list EL1, as illustrated in FIG. 5A, sub IDs of "cam001" to "cam004" are recorded in the rows having the device names of the camera #1 to the camera #4, respectively. A sub ID of "sen001" is recorded in the row having the device name of the sensor #1.

That is, the cameras CA1 to CA4 have the IDs (sub IDs) of "cam001" to "cam004" used for logging in to the relay server 3, respectively, and the sensor SE has the sub ID of "sen001".

In the subtype record section R4, a user type (subtype) representing the type of a device connected to the gateway device is recorded.

In the first device list EL1, as illustrated in FIG. 5A, a subtype of "camera" is recorded in rows having the device names of the camera #1 to the camera #4, and a subtype of "sensor" is recorded in the row having the device name of the sensor #1.

That is, the cameras CA1 to CA4 have a common subtype of "camera", and the sensor SE has a subtype of "sensor".

On the other hand, in the first device list EL1, in the rows having the device names of the external storage device #1, the external storage device #2, the information management server, and the transport management server, neither the sub ID nor the subtype is recorded. This indicates that neither the sub ID nor the subtype is assigned to the first external storage device 13a, the second external storage device 13b, the transport management server 15, and the information management server 17 of the automated warehouse system 1, and the first external storage device 13a, the second external storage device 13b, the transport management server 15, and the information management server 17 are unable to log in to the relay server 3.

Further, in the second device list EL2, neither the sub ID nor the subtype is stored. This indicates that the maintenance terminals 21a, 21b listed in the second device list EL2 are unable to log in to the relay server 3.

In the state record section R5, whether each device recorded in the device list is in a state of being able to communicate with the gateway device is recorded.

In the example of the first device list EL1 illustrated in FIG. 5A, "NG" is recorded in the rows having the device names of the camera #3 and camera #4, while "OK" is recorded in the other rows. That is, in the example of the first device list EL1 illustrated in FIG. 5A, the cameras CA3, CA4 of the automated warehouse system 1 are not yet able to communicate with the first gateway device 19.

On the other hand, in the second device list EL2, no information is recorded in the state record section R5. This indicates that the maintenance terminals 21a, 21b managed with the second device list EL2 are not subject to monitoring of whether the maintenance terminals 21a, 21b are able to communicate with the second gateway device 23.

The above data configurations allow the sub ID used by a device connected to the gateway device to log in to the relay server 3, the type (subtype) of the device, the connection state between the device and the gateway device, and the like to be recorded in the device lists. The data configurations further allow an address used when a communication session is established between the gateway devices to be managed.

### (5-2) Login-permitted device list

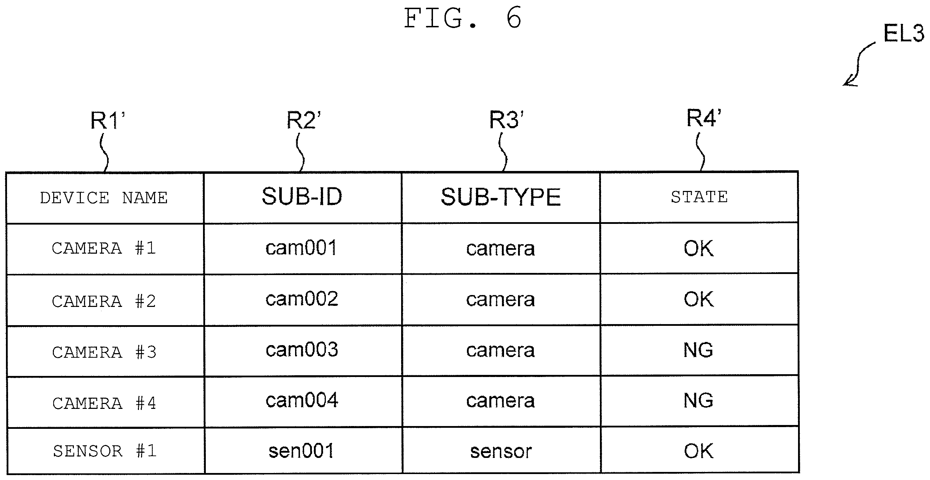

Next, with reference to FIG. 6, the data configuration of the login-permitted device list EL3 managed by the relay server 3 will be described. FIG. 6 is a diagram illustrating an example of the data configuration of the login-permitted device list.

The login-permitted device list EL3 is prepared by the gateway devices included in the automated warehouse system 1 and transmitted to the relay server 3. Therefore, each login-permitted device list EL3 managed by the relay server 3 is associated with the user ID of the gateway device that has prepared the login-permitted device list EL3.

The login-permitted device list EL3 illustrated in FIG. 6 is prepared by the first gateway device 19 of the automated warehouse system 1 and transmitted to the relay server 3.

The login-permitted device list EL3 differs from the device lists managed by the gateway devices in that neither information on a device that does not have the sub ID nor an address (IP address) of each device is recorded.

More specifically, as illustrated in FIG. 6, the login-permitted device list EL3 includes a device name record section R1', a sub ID record section R2', a subtype record section R3', a state record section R4'.

Recorded in the device name record section R1', the sub ID record section R2', the subtype record section R3', and the state record section R4' are contents identical to the contents recorded in the device name record section R1, the sub ID record section R3, the subtype record section R4, and the state record section R5 of the device list, respectively. Therefore, the detailed description will be omitted here.

### (5-3) Login information

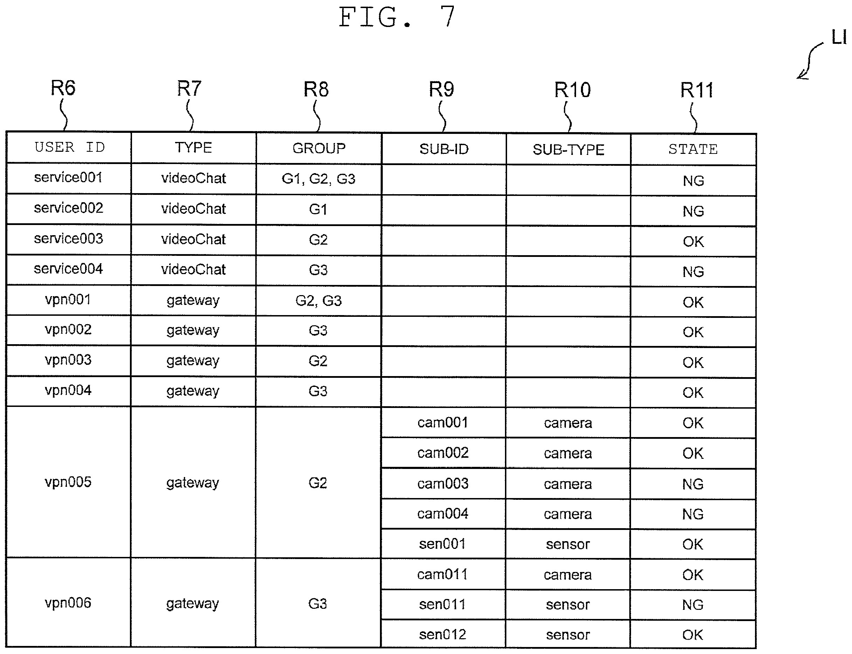

Hereinafter, with reference to FIG. 7, the login information LI managed by the relay server 3 will be described. FIG. 7 is a diagram illustrating an example of the data configuration of the login information.

The login information LI is information used for managing a user ID permitted to log in to the relay server 3. Specifically, the login information LI includes, a user ID record section R6, a user type record section R7, a group record section R8, a sub ID record section R9, a subtype record section R10, and a login state record section R11.

In the user ID record section R6, the login ID (user ID) used by each device to log in to the relay server 3. In the example illustrated in FIG. 7, "service001" to "service004" and "vpn001" to "vpn006" are recorded as user IDs in the record section.

A user ID of "service***" is used by the user to log in to the relay server 3 using the user terminal 5. On the other hand, a user ID of "vpn***" is used by the gateway devices to log in to the relay server 3.

Note that, in the login information LI illustrated in FIG. 7, the first gateway device 19 logs in to the relay server 3 with the user ID of "vpn005", and the second gateway device 23 logs in to the relay server 3 with the user ID of "vpn001".

In the user type record section R7, the user type of each user ID is recorded.

For the user ID of "service***", a user type of "videoChat" is recorded in the user type record section R7. This indicates that the user terminal 5 logged in with the user ID of "service***" is able to communicate by video chat. That is, this indicates that the user terminal 5 functions as a video chat client.

Further, the user terminal 5 logged in with the user ID associated with this user type is able to receive the data acquired by the cameras CA1 to CA4, the sensor SE, and the like of the automated warehouse system 1.

On the other hand, for the user ID of "vpn***", a user type of "gateway" is recorded in the user type record section R7. This indicates that the gateway device logged in with the user ID of "vpn***" having this user type is able to communicate with the other gateway device.

In the group record section R8, a group (an example of the user type) to which each user ID belongs is stored.

In the example illustrated in FIG. 7, there are three groups "G1" to "G3" as groups to which each user ID belongs. For example, the user ID of "service001" belongs to all the groups. On the other hand, the user ID of "vpn001" belongs to the groups G2 and G3. Furthermore, the user ID of "vpn005" belongs only to the group G2.

Recorded in the sub ID record section R9 and the subtype record section R10 is information identical to the information recorded in the sub ID record section R3 and the subtype record section R4 of the device list is recorded, respectively. Therefore, the description will be omitted here.

In the login state record section R11, whether a login to the relay server 3 with each user ID and/or each sub ID is active is recorded. In the login state record section R11, "OK" indicates that a login to the relay server 3 with the user ID in a row having the "OK" recorded therein is active. On the other hand, "NG" indicates that a login to the relay server 3 with the user ID in a row having the "NG" recorded therein is inactive.

That is, in the example illustrated in FIG. 7, logins to the relay server 3 with the user IDs or sub IDs of "service003", "vpn001" to "vpn004", "cam001", "cam002", "sen001", "cam011", and "sen012" are active.

It should be noted that the login information LI may be recorded with each user ID associated with a corresponding password.

The above data configuration allows the login information LI to be stored with the user ID used for logging in to the relay server 3, the user type of each user ID, the group (user type) to which each user ID belongs, and the sub IDs of the cameras CA1 to CA4, the sensor SE, and the like belonging to each group associated with each other. That is, in the login information LI, the login ID used for logging in to the relay server 3 and information on each login ID can be recorded.

### (6) Relay server operation

### (6-1) Outline of relay server operation

Hereinafter, an operation of the relay server 3 in the communication system 100 according to the present embodiment will be described. In the present embodiment, in response to a request from each device (the user terminal 5, the gateway devices, and the cameras, the sensor, and the like included in the automated warehouse system 1), the relay server 3 executes (i) a process of logging in to the relay server 3, (ii) a process of transmitting a device list to a device (the user terminal 5, the gateway device) that is logged in, (iii) a process of establishing a communication session between devices, and (iv) other control process.

The process of logging in to the relay server 3 is a process of causing each device to log in to the relay server 3. The process of transmitting a device list is a process of preparing a list of devices to which the user terminal 5 and the gateway devices are permitted to connect in response to a request from the terminal or the devices and transmitting the list to the terminal and the devices. Hereinafter, the list of devices to which the user terminal 5 and the gateway devices are permitted to connect will be referred to as "device list".

The process of establishing a communication session between devices is a process of establishing a communication session between the user terminal 5 or the gateway devices, and a device that has made a connection request.

The other control process includes a process of monitoring a communication session, a process of terminating a communication session, a process of transmitting and receiving data over a communication session, a process of updating the login information LI and the device list, and the like.

Each of the above processes is implemented by a control unit including the processor 31, the RAM 32, the ROM 33, and the like in the relay server 3 executing the program stored in the storage device 35.

Hereinafter, a specific process flow of the above (i) to (iv) will be described.

### (6-2) Login process

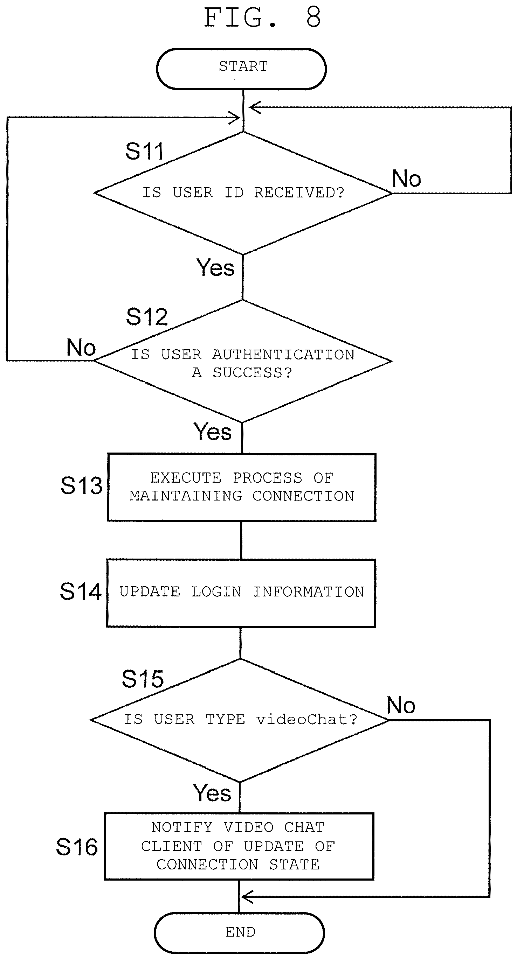

The details of the login process executed in the relay server 3 will be described below with reference to FIG. 8. FIG. 8 is a flowchart illustrating the login process. A description will be given below of an example of logging in to the relay server 3 using the user ID of "service001" in the user terminal 5 will be described. The gateway devices, and the cameras and the sensor included in the automated warehouse system 1 log in to the relay server 3 in almost the same manner.

First, the user accesses the relay server 3 using, for example, a web browser or a dedicated application of the user terminal 5. Thereafter, the relay server 3 requests the user terminal 5 that has accessed to input a user ID and a password.

When the user inputs the user ID (and a password) on the web browser in response to the request, the user terminal 5 transmits, to the relay server 3, the user ID (and the password) thus input.

Upon receiving the user ID from the user terminal 5, the gateway devices, or the cameras or sensor of the automated warehouse system 1 ("Yes" in step S11), the login process proceeds to step S12.

In step S12, the relay server 3 executes a user authentication process based on the user ID and the password thus received.

Specifically, the relay server 3 first refers to the user ID record section R6 and the sub ID record section R9 of the login information LI, and determines, when the user ID received does not exist in the login information LI, that the user authentication has failed.

When the user ID received exists in the login information LI, the relay server 3 determines whether the password received matches a password associated with the user ID in the login information LI. When the passwords match each other, the relay server 3 determines that the user authentication has succeeded. On the other hand, when the input password and the stored password do not match each other, the relay server 3 determines that the user authentication has failed.

When the user authentication has failed ("No" in step S12), the relay server 3 requests the user terminal 5 that has accessed to reinput the user ID and the password.

Note that the relay server 3 may request re-inputting of the user ID and the password any number of times or a predetermined number of times. Further, when the user authentication fails even after the re-inputting of the user ID and the password is requested the predetermined number of times, the relay server 3 may notify the user terminal 5 that the user authentication has failed.

On the other hand, when the user authentication succeeds based on the user ID and the password received ("Yes" in step S12), the relay server 3 executes, in step S13, a process of maintaining the connection with the user terminal 5 that has transmitted the user ID. Thereafter, the login process proceeds to step S14.

In step S14, the relay server 3 updates the login information LI in response to the login with the user ID of "service001".

Specifically, the relay server 3 changes the row having the login state of the user ID of "service001" recorded therein of the login state record section R11 of the login information LI from "NG" to "OK".

This allows the relay server 3 to reflect the fact that the login has been made with the received user ID in the login information LI.

After updating the login information LI, the relay server 3 refers to, in step S15, the user type record section R7 of the login information LI and determines whether the user type of the user ID with which the login has succeeded is "videoChat".

When the user type of the user ID with which the login has succeeded is "videoChat" ("Yes" in step S15), the login process proceeds to step S16. On the other hand, when the user type of the user ID with which the login has succeeded is not "videoChat" ("No" in step S15), the relay server 3 terminates the login process.

In step S16, the relay server 3 notifies each user terminal 5 logged in with the user ID whose user type is "videoChat" (that is, the user ID of "service***") that a user ID capable of participating in video chat is newly logged in (update of connection state).

Thereby, the user terminal 5 that is a video chat client can display, on a video chat application, an indication that a new user can participate, for example.

Executing the above steps S11 to S16 as the login process allows the relay server 3 to use the user ID registered in the login information LI to make the user terminal 5, the gateway devices, and the cameras and the sensor included in the automated warehouse system 1 log in to the relay server 3.

### (6-3) Process of transmitting device list

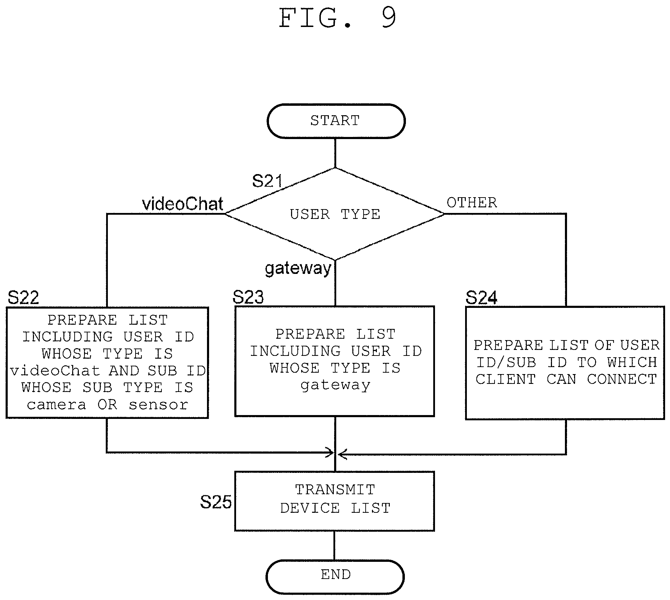

Next, with reference to FIG. 9, the process of transmitting a device list will be described. FIG. 9 is a flowchart illustrating the process of transmitting a device list.

When the user terminal 5 or the gateway device logged in to the relay server 3 requests the relay server 3 to transmit a device list, the relay server 3 first prepares the device list for the user terminal 5 or the gateway device.

Specifically, through the execution the following steps, the device list can be prepared.

First, in step S21, the relay server 3 refers to the user ID record section R6 of the login information LI and identifies a user ID of the user terminal 5 or the gateway device that has made the request to transmit a device list. Thereafter, the relay server 3 refers to the user type record section R7 of the login information LI and determines a user type of the user ID thus identified.

When the user type thus identified is "videoChat" ("videoChat" in step S21), that is, the user terminal 5 has made the request to transmit a device list, the process of transmitting a device list proceeds to step S22.

On the other hand, when the user type identified is "gateway" ("gateway" in step S21), that is, the gateway device has made the request to transmit a device list, the process of transmitting a device list proceeds to step S23.

Furthermore, when the user type identified is neither of the above types ("other" in step S21), the process of transmitting a device list proceeds to step S24.

The case where the user type identified is neither "videoChat" nor "gateway" corresponds to a case, described below, where an application running on the user terminal 5 has made the request to transmit a device list.

As an example, there is a case where an image acquisition application for acquiring images from the cameras CA1 to CA4 is running on the user terminal 5. In this case, the image acquisition application makes the request to transmit a device list with the user type of "camera".

As another example, there is a case where a data acquisition application for acquiring measurement data acquired by the sensor SE is running on the user terminal 5. In this case, the data acquisition application makes the request to transmit a device list with the user type of "sensor".

In step S22, the relay server 3 prepares a device list for the user terminal 5 that has made the request to transmit a device list.

Specifically, the relay server 3 first identifies a group to which the user ID of the user terminal 5 that has made the request to transmit a device list belongs. Thereafter, a user ID belonging to the group thus identified is selected from user IDs whose user type is "videoChat" in the login information LI and is then added to the device list.

Further, the relay server 3 adds, to the device list, a sub ID and subtype included in the login-permitted device list EL3 of the gateway device belonging to the group identified.

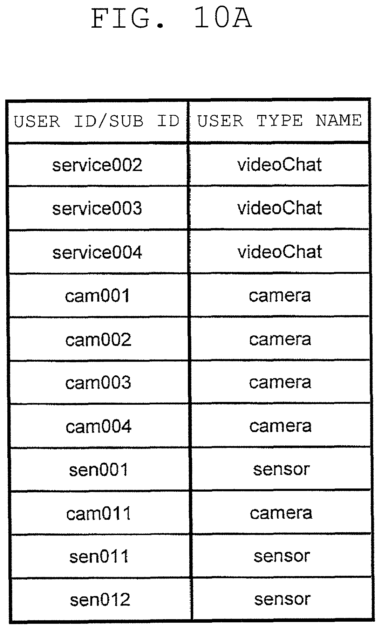

For example, when the user terminal 5 that has made the request to transmit a device list is logged in with the user ID of "service001", a device list as illustrated in FIG. 10A is prepared through the execution of the above step S22. FIG. 10A is a diagram illustrating an example of the device list prepared for the user terminal.

As illustrated in the login information LI of FIG. 7, since "service001" belongs to all the groups, the relay server 3 prepares a device list including the user IDs of "service002" to "service004", and the sub IDs of "cam001" to "cam004", "sen001" "cam011" "sen011" and "sen012" that each belong any one of the groups of "G1" to "G3".

Further, as illustrated in FIG. 10A, the device list prepared in step S22 includes a user type name of each user ID and sub ID. This allows the user of the user terminal 5 to select the user ID and/or sub ID of an appropriate device.

On the other hand, in step S23, the relay server 3 prepares a device list for the gateway device that has made the request to transmit a device list.

Specifically, the relay server 3 identifies a group to which the user ID of the gateway device that has made the request to transmit a device list belongs, selects a user ID belonging to the group thus identified from user IDs whose user type is "gateway", and adds the user ID to the device list.

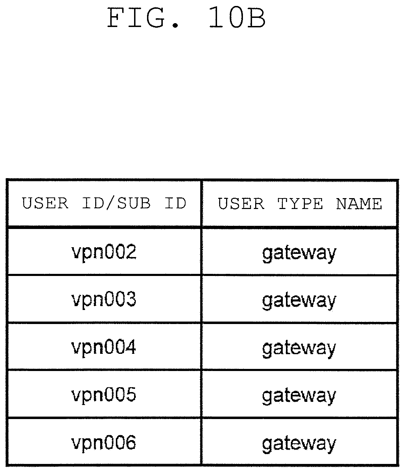

For example, when the second gateway device 23 (user ID: vpn001) makes the request to transmit a device list, a device list as illustrated in FIG. 10B is prepared through the execution of the above step S23. FIG. 10B is a diagram illustrating an example of the device list prepared for the gateway device.

As illustrated in the login information LI of FIG. 7, since the user ID of "vpn001" belongs to the groups of "G2" and "G3", the relay server 3 prepares a device list including the user IDs of "vpn002" to "vpn006" as illustrated in FIG. 10B.

Further, in step S24, the relay server 3 prepares an appropriate device list based on an application running on the user terminal 5, or the like.

For example, when the image acquisition application has made the request to transmit a device list, the relay server 3 selects a sub ID that belongs to a group to which the user terminal 5 on which the image acquisition application is running belongs and whose subtype is "camera" and then prepares a device list.

On the other hand, when the data acquisition application has made the request to transmit a device list, the relay server 3 selects a sub ID that belongs to a group to which the user terminal 5 on which the data acquisition application is running belongs and whose subtype is "sensor" and then prepares a device list.

After preparing the device list through the execution of the above steps S21 to S24, the relay server 3 transmits, in step S25, the device list thus prepared to the user terminal 5 or the gateway device that has made the request to transmit a device list.

When the relay server 3 transmits the above device list to the user terminal 5 or the gateway device, the user using the user terminal 5 or the maintenance terminal 21a, 21b under control of the gateway device can selects a desired device to connect to from the device list. That is, the user of the user terminal 5 or the maintenance terminals 21a, 21b does not mistakenly connect the user terminal 5 or the gateway device to a device unrelated or inappropriate to the user terminal 5 or the gateway device. This allows the relay server 3 to appropriately relay communication between the user terminal 5 or the gateway device, and the device.

### (6-4) Process of establishing communication session

### (6-4-1) Process of establishing communication session between user terminals

The process of establishing a communication session executed by the relay server 3 will be described below. In the present embodiment, the relay server 3 establishes a communication session for communication between the user terminals 5 and between the user terminal 5 and the camera or sensor of the automated warehouse system 1. Further, the relay server 3 is involved in establishing a communication session between the gateway devices.

Hereinafter, the process of establishing a communication session in these three cases will be described in detail.

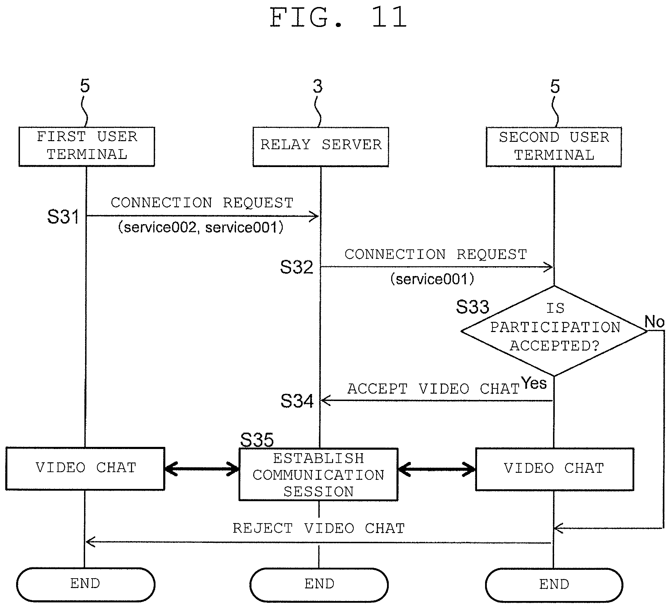

First, with reference to FIG. 11, a process of establishing a communication session between user terminals 5 will be described. FIG. 11 is a flowchart illustrating the process of establishing a communication session between the user terminals.

In the present embodiment, a communication session between the user terminals 5 is established for video chat communication between the user terminals 5.

Therefore, a description will be given below of the process of establishing a communication session between the user terminals 5 with reference to a case, as an example, where video chart communication is performed between a user terminal 5 logged in with the user ID of "service001" (referred to as a "first user terminal") and a user terminal 5 logged in with the user ID of "service002" (referred to as a "second user terminal").

First, when the first user terminal requests the relay server 3 to transmit a device list, the relay server 3 prepares a device list as illustrated in FIG. 10A and transmits the device list to the first user terminal. This is because the first user terminal is logged in to the relay server 3 with the user ID of "service001". Upon receiving the device list, the first user terminal displays the device list on the display.

Thereafter, when the user of the first user terminal selects the user ID of "service002" from the device list in step S31, the first user terminal transmits, to the relay server 3, a connection request including the user ID of "service002" of the second user terminal to which a connection is requested and the user ID of "service001" from which a connection is requested.

Upon receiving the connection request, the relay server 3 refers to, in step S32, the user ID record section R6 of the login information LI and identifies the second user terminal logged in with the user ID to which a connection is requested.

Thereafter, the relay server 3 transmits, to the second user terminal thus identified, a connection request indicating that the first user terminal has requested video chat communication. At this time, the connection request transmitted by the relay server 3 includes the user ID of "service001", that is, an ID for identifying the first user terminal.

Upon receiving the connection request from the relay server 3, the second user terminal determines, in step S33, whether to accept the user ID of "service001" as a video chat partner.

For example, when the user of the second user terminal rejects the user ID of "service001" as a video chat partner on the video chat client running on the second user terminal ("No" in step S33), the second user terminal notifies the relay server 3 that the user ID of "service001" is not acceptable as a partner of video chat communication.

Upon receiving the notification, the relay server 3 terminates the process of establishing a communication session without establishing a communication session between the first user terminal and the second user terminal. At this time, the relay server 3 notifies the first user terminal that video chat communication has been rejected.

On the other hand, when the user of the second user terminal has accepted the user ID of "service001" as a video chat partner ("Yes" in step S33), the second user terminal transmits, to the relay server 3, a signal indicating acceptance of video chat communication with the user ID of "service001" in step S34.

Upon receiving the signal indicating acceptance of video chat communication with the user ID of "service001", the relay server 3 establishes, in step S35, a communication session between the first user terminal and the second user terminal.

This allows the first user terminal and the second user terminal to communicate with each other by video chat over the communication session thus established.

### (6-4-2) Process of establishing communication session between user terminal and camera/sensor

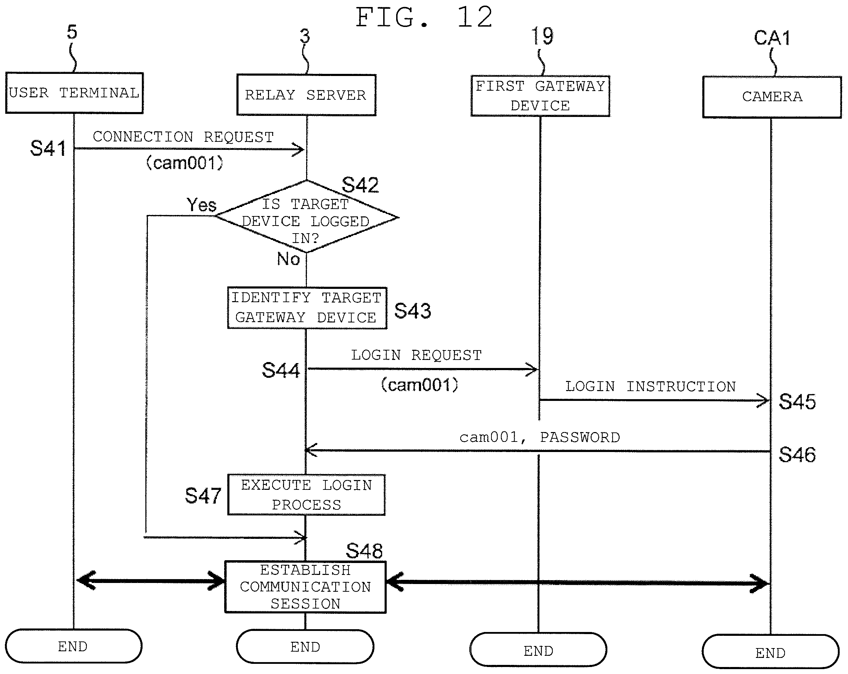

Hereinafter, with reference to FIG. 12, a process of establishing a communication session between the user terminal 5, and the camera and the sensor of the automated warehouse system 1 will be described. FIG. 12 is a flowchart illustrating the process of establishing a communication session between the user terminal, and the camera or the sensor.

A communication session between the user terminal 5, and the camera and the sensor is established, for example, when it is desired to monitor the image data acquired by the camera or the measurement data acquired by the sensor using the user terminal 5.

A description will be given below of the process of establishing a communication session between the user terminal and the camera/sensor with reference to a case, as an example, where the user terminal 5 logged in to the relay server 3 with the user ID of "service001" makes a connection request to the camera CA1 (sub ID: cam001) of the automated warehouse system 1.

When the user terminal 5 requests the relay server 3 to transmit a device list, the relay server 3 prepares a device list as illustrated in FIG. 10A and transmits the device list to the user terminal 5. This is because the user terminal 5 is logged in to the relay server 3 with the user ID of "service001". Upon receiving the device list, the user terminal 5 displays the device list on the display.

When the user of the user terminal 5 selects the sub ID of "cam001" from the device list, the user terminal 5 transmits, to the relay server 3, a connection request including the sub ID of "cam001" to which a connection is requested in step S41.

Upon receiving the connection request, the relay server 3 determines, in step S42, whether a login to the relay server 3 with the sub ID of "cam001" is active.

Specifically, the relay server 3 refers to the login state record section R11 of the login information LI, and determines, when a row corresponding to the sub ID of "cam001" of the login state record section R11 indicates "OK", that the login to the relay server 3 with the sub ID is active. On the other hand, when the row indicates "NG", the relay server 3 determines that the login to the relay server 3 with the sub ID is inactive.

When the login to the relay server 3 with the sub ID of "cam001" is active ("Yes" in step S42), the process of establishing a communication session proceeds to step S48.

On the other hand, when the login to the relay server 3 with the sub ID is inactive ("No" in step S42), the process of establishing a communication session proceeds to step S43.

In step S43, the relay server 3 refers to the login information LI and/or the device lists (the first device list EL1, the second device list EL2) and identifies a gateway device to which the camera CA1 having the sub ID of "cam001" is connected. In the present embodiment, the first gateway device 19 is identified as the gateway device to which the camera CA1 is connected.

Thereafter, in step S44, the relay server 3 transmits, to the first gateway device 19 thus identified, a signal that causes the camera CA1 to log in to the relay server 3 (referred to as a "login request signal"). Note that the login request signal includes a sub ID (cam001) of a device (camera CA1) to which a connection is requested. This allows the first gateway device 19 to determine which of the devices connected to the first gateway device 19 is caused to log in.

Upon receiving the login request signal, the first gateway device 19 identifies, in step S45, the camera CA1 as a device to which a connection is requested, based on the sub ID included in the login request signal. Next, the first gateway device 19 transmits a login instruction signal that instructs the camera CA1 thus identified to log in to the relay server 3.

When a row of the state record section R5 of the first device list EL1 stored in the first gateway device 19 corresponding to the camera CA1 indicates "NG", that is, the camera CA1 is not yet able to communicate with the first gateway device 19, the first gateway device 19 may attempt to activate the camera CA1 by, for example, the "Wake On LAN" function or the like. Then, after communication with the camera CA1 is enabled, the first gateway device 19 may transmit the login instruction signal to the camera CA1.

Further, when the camera CA1 becomes activated and able to communicate with the first gateway device 19, the first gateway device 19 changes the row corresponding to the camera CA1 of the state record section R5 from "NG" to "OK" to update the first device list EL1.

After the execution of step S45, the camera CA1 that has received the login instruction signal transmits, to the relay server 3, the sub ID (cam001) of the camera CA1 and a password used for logging in to the relay server 3 in step S46.

Thereafter, the relay server 3 that has received the sub ID and the password executes, in step S47, the login process in the above steps S11 to S16 to make the camera CA1 log in with the sub ID of "cam001".

After the camera CA1 successfully logs in or when determination is made that the camera CA1 is already logged in in the above step S42, the relay server 3 establishes, in step S48, a communication session between the user terminal 5 and the camera CA1.

The relay server 3 can establish, through the execution of the above steps S41 to S48, a communication session between the camera or the sensor, and the user terminal 5 only when the sub ID is selected on the user terminal 5, that is, there is a connection request that the user terminal 5 is desired to communicate with the camera or the sensor.

When a device that desires to establish a communication session with the user terminal 5 is not logged in to the relay server 3, the relay server 3 causes the device to log in, and, after the device is logged in, establishes the communication session.

That is, when a device to which a connection is not requested is not logged in to the relay server 3, the state is maintained. This allows the relay server 3 to minimize the number of devices that remain logged in, which makes it possible to reduce a load of the relay process between a device and the user terminal 5.

Further, the login request signal that causes a device to which a connection is requested to log in to the relay server 3 is transmitted to the gateway device through the execution of the above steps S43 and S44. Thereby, the relay server 3 causes the gateway device to request the device connected to the gateway device to log in.

After the execution of the above steps S41 to S48, the user terminal 5, and the camera CA1 of the automated warehouse system 1 become able to communicate with each other over the communication session established through the execution of steps S41 to S48.

### (6-4-3) Process of establishing communication session between gateway devices.

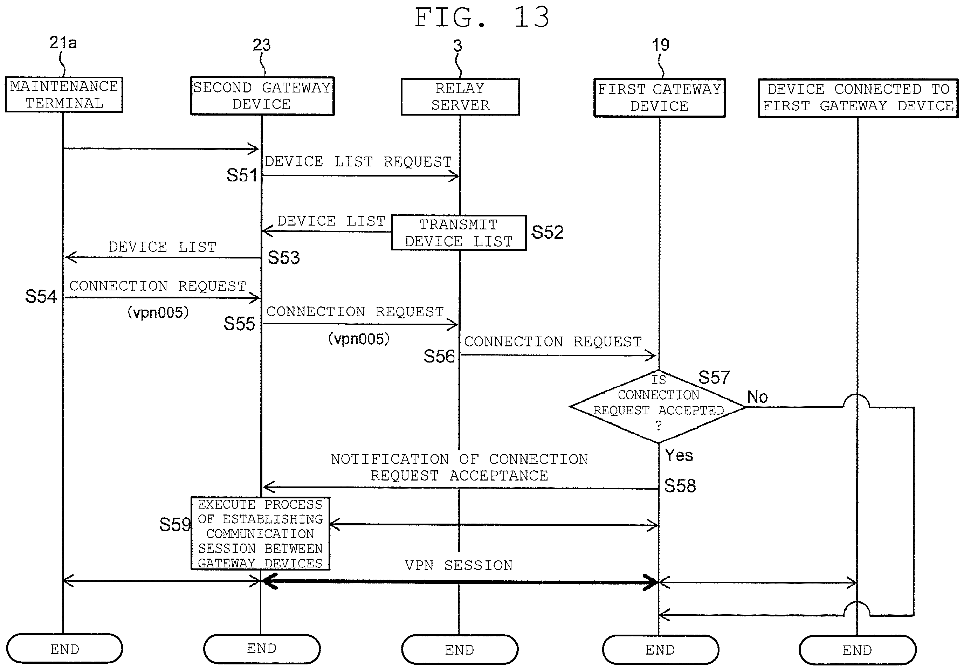

Hereinafter, a process of establishing a communication session between the gateway devices will be described with reference to FIG. 13. FIG. 13 is a flowchart illustrating the process of establishing a communication session between the gateway devices.

A description will be given below of the process of establishing a communication session between the gateway devices with reference to a case, as an example, where when the second gateway device 23 of the maintenance base 2 makes a connection request to the first gateway device 19 of the automated warehouse system 1, a communication session is established between the first gateway device 19 and the second gateway device 23.

For example, a maintenance application for the automated warehouse system 1 is executed on the maintenance terminal 21a to request the second gateway device 23 to connect to the gateway device of the automated warehouse system 1.

Thereafter, in step S51, the second gateway device 23 transmits, to the relay server 3, a transmission request of a device list of the other gateway device to which the second gateway device 23 is permitted to connect. The transmission request includes the user ID of "vpn001" of the second gateway device 23 as information to indicate from which of the gateway devices the transmission request is transmitted.

In step S52, upon receiving the transmission request, the relay server 3 executes, in the above steps S21 to 25, the process of transmitting a device list to prepare a device list for the second gateway device 23 and transmit the device list to the second gateway device 23.

In response to the transmission request of a device list from the second gateway device 23, the relay server 3 prepares and transmits a device list as illustrated in FIG. 10B.

Upon receiving the device list, the second gateway device 23 transfers, in step S53, the device list to the maintenance terminal 21a. Thereby, in the maintenance terminal 21a, a list of other gateway device to which the second gateway device 23 is permitted to connect is displayed.

When the user of the maintenance terminal 21a selects the user ID of "vpn005" from the device list as a connection destination, the maintenance terminal 21a transmits, to the second gateway device 23, a connection request including the user ID of "vpn005" as information in step S54.

Upon receiving the connection request, the second gateway device 23 transmits, in step S55, the connection request to the relay server 3.

Upon receiving this connection request, the relay server 3 identifies, in step S56, the first gateway device 19 based on the user ID of "vpn005" to which a connection is requested, and transmits the connection request to the first gateway device 19.

Upon receiving the connection request, the first gateway device 19 determines, in step S57, whether to accept the connection request. When determining not to accept the connection request ("No" in step S57), the process of establishing a communication session is terminated without establishing a communication session between the first gateway device 19 and the second gateway device 23.

On the other hand, when determining to accept the connection request ("Yes" in step S57), the first gateway device 19 transmits, to the second gateway device 23, a notification of acceptance of the connection request in step S58.

Upon receiving the notification, the second gateway device 23 executes, in step S59, the process of establishing a communication session (for example, a virtual private network (VPN)) session) with the first gateway device 19.

Specifically, first, the first gateway device 19 and the second gateway device 23 exchange the first device list EL1 and the second device list EL2 with each other. This causes both the first gateway device 19 and the second gateway device 23 to have the first device list EL1 and the second device list EL2.

Thereafter, the communication session between the first gateway device 19 and the second gateway device 23 is established.

Establishing the communication session between the first gateway device 19 and the second gateway device 23 as described above enables the maintenance terminal 21a to access all devices connected to the gateway device 19 via the second gateway device 23 and the first gateway device 19.

In other words, the maintenance terminal 21a is able to access not only the cameras CA1 to CA4 and the sensor SE of the automated warehouse system 1 but also the first external storage device 13a, the second external storage device 13b, the transport management server 15, and the information management server 17.

In yet other words, the maintenance terminal 21a that is unable to log in to the relay server 3 is able to access not only devices that are permitted to log in to the relay server 3 of the automated warehouse system 1 but also devices that are unable to log in to the relay server 3.

Further, after establishing a communication session between the first gateway device 19 and the second gateway device 23, the maintenance terminal 21a and each device of the automated warehouse system 1 communicate with each other using IP addresses recorded in the respective address record sections R2 of the first device list EL1 and the second device list EL2 exchanged.

For example, the maintenance terminal 21a is able to access the first external storage device 13a via communication with the second gateway device 23 using the IP address of "192.168.0.21".

On the other hand, for example, the first external storage device 13a is able to transmit data to the maintenance terminal 21a via communication with the first gateway device 19 using the IP address of "172.28.0.2" as a destination of the data.

### (6-5) Other control process in relay server

### (6-5-1) Outline of other control process

Control processes executed in the relay server 3 other than the login process, the process of transmitting a device list, and the process of establishing a communication session will be described below.

In the present embodiment, the relay server 3 executes (i) relaying data transmission and reception over a communication session, (ii) monitoring whether the communication session thus established is in a connected state, (iii) a logout process when a logout request is made from the user terminal 5 or the like, and (iv) monitoring update of the device list of each gateway device in response to a request from each device over the communication session maintained.

A description will be given in detail below of each of the above processes.

### (6-5-2) Process of relaying data transmission and reception over communication session

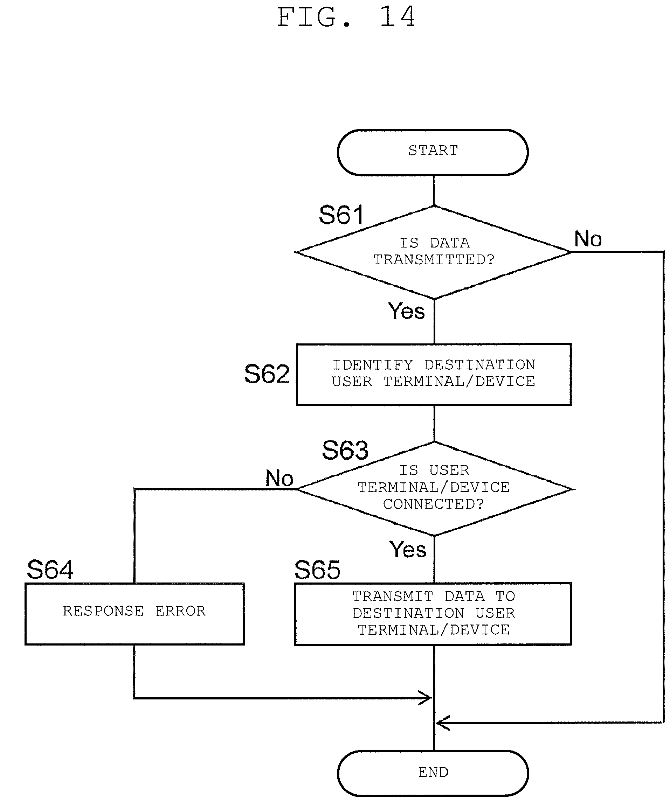

First, a process of relaying data transmission and reception over a communication session will be described with reference to FIG. 14. FIG. 14 is a flowchart illustrating the process of relaying data transmission and reception over a communication session.

A description will be given below of a case, as an example, where data transmission is executed from the camera CA1 of the automated warehouse system 1 to the user terminal 5 logged in with the user ID of "service001".

Further, in the present embodiment, it is assumed that the user terminal 5 and the camera CA1 between which a communication session has been established communicate with each other using a user ID or a sub ID as a communication destination.

In step S61, when the relay server 3 is requested to transmit data from the camera CA1 to the user ID of "service001" ("Yes" in step S61), the relay server 3 refers to, in step S62, the user ID record section R6 of the login information LI and/or the sub ID record section R3 of the device list to identify a device to which the data is to be transmitted based on the user ID of "service001" or a sub ID.

In the above case, the relay server 3 identifies, based on the user ID of "service001", the user terminal 5 to which the data is to be transmitted.

Thereafter, in step S63, the relay server 3 confirms the connection state of the user terminal 5 to which the data is to be transmitted.

Specifically, referring to the login state record section R11 of the login information LI, when a record in the row corresponding to the user ID of "service001" of the login state record section R11 indicates "NG" ("No" in step S63), that is, a login to the relay server 3 with the user ID of "service001" is inactive, the relay server 3 determines, in step S64, that the data cannot be transmitted to the user terminal 5 and notifies the camera CA1 that is a transmission source of an error.

On the other hand, when the above record of the login state record section R11 indicates "OK" ("Yes" in step S63), the relay server 3 transmits, in step S65, the data from the camera CA1 to the user terminal 5 that is a destination.

By executing steps S61 to S65, data can be transmitted and received between the user terminals 5 or between the user terminal 5 and the camera and/or the sensor of the automated warehouse system 1 with the user ID or the sub ID used for logging in to the relay server 3 used as a data transmission destination.

### (6-5-3) Process of monitoring communication session

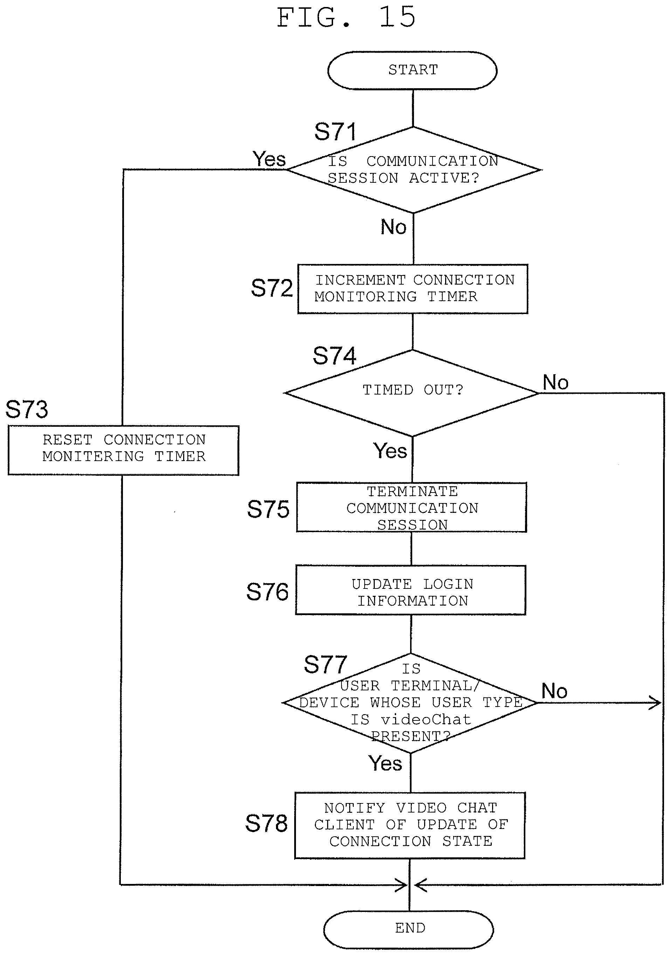

Next, a process of monitoring a connection state of a communication session will be described with reference to FIG. 15. FIG. 15 is a flowchart illustrating the process of monitoring a communication session.

In step S71, the relay server 3 that starts monitoring a communication session first determines whether the communication session is in an "active" state. The state where the communication session is "active" indicates that devices between which the communication session has been established are able to communicate with each other.

For example, a connection confirmation signal is periodically transmitted to the user terminal 5, the gateway device, and the like that have established a communication session with the relay server 3, and when a response to the signal is received, the communication session is determined to be in an active state.

When a communication session subject to the monitoring is determined to be inactive, that is, no response to the connection confirmation signal is received ("No" in step S71), the relay server 3 increments, in step S72, a connection monitoring timer. Specifically, the relay server 3 increments the connection monitoring timer by 1. Thereafter, the process of monitoring a communication session proceeds to step S74.

As described above, the connection monitoring timer is defined as the number of times that none of the devices having a communication session subject to the monitoring has not responded to the connection confirmation signal. Since this connection confirmation signal is output at specific time intervals, the connection monitoring timer corresponds to a time during which the communication session subject to the monitoring remains inactive.

On the other hand, when determination is made that the communication session subject to the monitoring is active ("Yes" in step S71), the relay server 3 resets, in step S73, the connection monitoring timer for the communication session subject to the monitoring (a value of the connection monitoring timer is set to 0), and continues monitoring the communication session.

After determining that the communication session is inactive, the relay server 3 determines, in step S74, whether the communication session subject to the monitoring has been inactive for a predetermined time or longer. Hereinafter, a state where the communication session has been inactive for the predetermined time or longer is referred to as "communication session has timed out".

The relay server 3 determines whether the communication session has timed out based on the value of the connection monitoring timer.

Specifically, when the connection monitoring timer is smaller than a predetermined value, the relay server 3 determines that the communication session subject to the monitoring has not timed out. In this case ("No" in step S74), the relay server 3 maintains the connection of the communication session and continues monitoring the communication session.

On the other hand, when the connection monitoring timer is equal to or greater than the predetermined value, the relay server 3 determines that the communication session subject to the monitoring has timed out. In this case ("Yes" in step S74), the relay server 3 executes, in step S75, a process of terminating a communication session that has timed out.

Hereinafter, the process of terminating a communication session that has timed out in step S75 will be described. A description will be given below of a case, as an example, where the communication session established between the user terminal 5 and the camera CA1 has timed out because the user terminal 5 has logged out of the relay server 3.

First, the relay server 3 determines whether there is an active communication session established between the camera CA1 and the other user terminal 5 or the like.

Next, when there is no active communication session between the camera CA1 and the other user terminal 5 or the like, the relay server 3 transmits, to the camera CA1, an instruction that causes the camera CA1 to log out of the relay server 3. Upon receiving the instruction, the camera CA1 logs out of the relay server 3.

This allows the relay server 3 to prevent the user terminal 5 and/or a device included in a communication session that has timed out from uselessly remaining logged in. This makes it possible to reduce a process load on the process of relaying communication in the relay server 3.

Thereafter, in step S76, the relay server 3 records "NG" in the login state record section R11 corresponding to the user terminal 5 and/or a device that has logged out to update the login information LI.

After terminating the communication session subject to the monitoring through the execution of the above steps S75 and S76, the relay server 3 determines, in step S77, whether there is a user terminal 5 that was logged in with a user ID whose user type is "videoChat" among user terminals 5 having the communication session thus terminated.

When determining that there is a user terminal 5 that was logged in with a user ID whose user type is "videoChat" ("Yes" in step S77), the relay server 3 notifies, in step S78, a user terminal 5 on which a video chat client is running that the user terminal 5 cannot request the user ID that logged out to participate in the video chat anymore.

Thereby, the user terminal 5 that is a video chat client can display, on the video chat application, a fact that a user who is able to participate has left the video chat, for example.

On the other hand, when determining that there is no user terminal 5 that was logged in with the user ID whose user type is "videoChat" ("No" in step S77), the relay server 3 terminates the process of monitoring the communication session that has been terminated without making a notification about update of the connection state.

### (6-5-4) Logout process

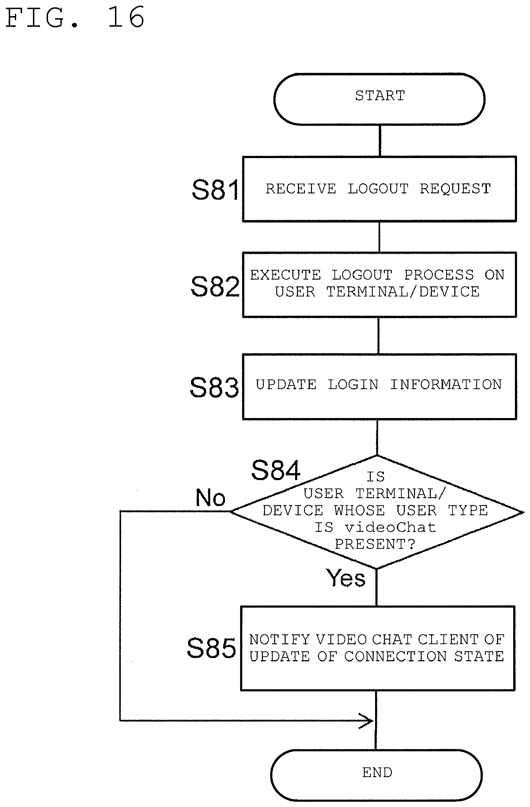

Hereinafter, a process of causing the user terminal 5 or the like to log out of the relay server 3 in response to a logout request from the user terminal 5 or the like will be described with reference to FIG. 16. FIG. 16 is a flowchart illustrating the logout process.

Upon receiving the logout request from the user terminal 5 or a device of the automated warehouse system 1 in step S81 of FIG. 16, the relay server 3 executes the process of causing the user terminal 5 or the device to which the request has been made to log out in step S82.

After causing the user terminal 5 or the device to log out, the relay server 3 changes, in step S83, a record in the login state record section R11 corresponding to the user terminal 5 or the device that has logged out to "NG" to update the login information Update LI.

Thereafter, in step S84, the relay server 3 determines whether there is a user terminal 5 that was logged in with the user ID whose user type is "videoChat" among user terminals 5 that have logged out.

When determining that there is a user terminal 5 that was logged in with the user ID whose user type is "videoChat" ("Yes" in step S84), the relay server 3 notifies, in step S85, a user terminal 5 on which a video chat client is running that the user terminal 5 cannot request the user ID that logged out to participate in the video chat anymore.

Thereby, the user terminal 5 that is a video chat client can display, on the video chat application, a fact that a user who is able to participate has left the video chat, for example.

On the other hand, when determining that there is no user terminal 5 that was logged in with the user ID whose user type is "videoChat" ("No" in step S84), the relay server 3 terminates the logout process without making a notification about update of the connection state.

### (6-5-5) Process of updating login-permitted device list

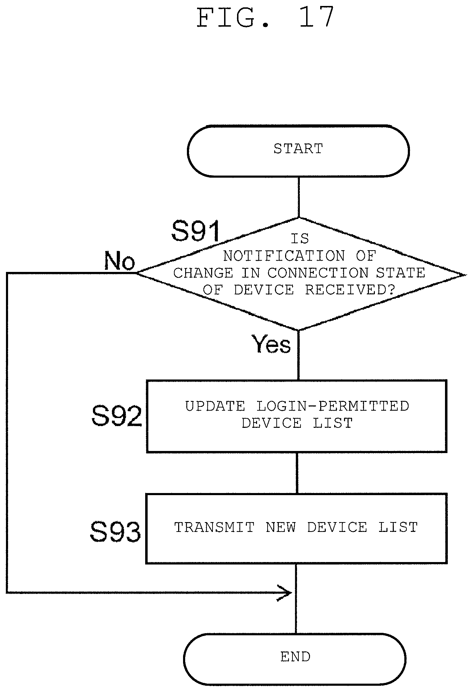

Hereinafter, a process on the relay server 3 side when the device list owned by the gateway device is updated will be described with reference to FIG. 17. FIG. 17 is a flowchart illustrating a process of updating the login-permitted device list.

When receiving a notification from any one of the gateway devices of the automated warehouse system 1 that the connection state of a device that is permitted to log in to the relay server 3 has changed ("Yes" in step S91), the relay server 3 updates, in step S92, the login-permitted device list EL3 stored in the storage device 35.

More specifically, in the login-permitted device list EL3, the relay server 3 changes a record in a row of the state record section R4' corresponding to the sub ID of the device whose connection state has changed from "OK" to "NG" or vice versa.

Further, for example, in the existing automated warehouse system 1, when an automated warehouse system and/or a gateway device is newly added and a device permitted to log in to the relay server 3 such as the camera CA/sensor SE is removed and/or added, in step S91, a new login-permitted device list EL3 is prepared and transmitted by the gateway device together with the above notification.

Thereafter, in step S92, the relay server 3 stores the new login-permitted device list EL3 in the storage device 35, and updates the login information LI based on the updated device list.

This makes it possible to reflect addition, removal, or the like of a camera and/or a sensor with respect to the automated warehouse system 1 in the login information LI.

After updating the login-permitted device list EL3 and the login information LI, when there is a change in a registration state of a user ID and/or a sub ID in the login information LI, the relay server 3 prepares, in step S93, a new device list and transmits the device list to a user ID whose user type is "videoChat" (that is, the user terminal 5) and/or a user ID whose user type is "gateway" (that is, the gateway device).

The above "when there is a change in a registration state of a user ID and/or a sub ID in the login information LI" corresponds to, for example, a case where the number of user IDs and/or sub IDs recorded in the login information LI increases or decreases in response to an increase or decrease in the number of gateway devices and/or cameras/sensors installed in the communication system 100 and/or a case where contents of user IDs and/or sub IDs recorded in the login information LI change, and the like.

Specifically, for example, when the number of gateway devices installed in the communication system 100 increases or decreases or user IDs set to gateway devices change, a new device list is prepared including a user ID whose user type is "gateway" and transmitted to a gateway device that is logged in to the relay server 3.

On the other hand, for example, when the number of cameras and/or sensors installed in the automated warehouse system 1 increases or decrease or sub IDs set to cameras and/or sensors change, a new device list is prepared including a user ID whose user type is "videoChat", a sub ID whose sub type is "camera", and a sub ID whose sub type is "sensor" and transmitted to a user terminal 5 that is logged in to the relay server 3.

By executing the above step S93, a user using the user terminal 5 that is logged in to the relay server 3 and/or a user using the maintenance terminal 21a, 21b can know there is a change (such as an increase or decrease) in a camera, a sensor, and a gateway device that can communicate.

### 2. Common matter of the embodiment

The first embodiment has the following configuration and function.

The relay server 3 (an example of the relay server) includes the network interface 34 (an example of the network interface), the storage device 35 (an example of the storage device), and a control unit (an example of the control unit). The network interface 34 communicates with the user terminal 5 (an example of the user terminal) and a device such as a camera and/or a sensor (an example of the to-be-connected device). The storage device 35 has the login information LI (an example of the login information) stored therein. The login information LI is information in which a user ID, a group to which the user ID belongs (an example of the user type), and a sub ID (an example of the device ID) are stored in association with each other.

When the user terminal 5 performs a login, the control unit identifies the group to which the user ID used for the login belongs and the sub ID belonging to the group with reference to the login information LI, and transmits a device list including the sub ID thus identified (an example of a list of device IDs) to the user terminal 5 that is logged in.

Further, when receiving a connection request (an example of selection of a device ID) including the sub ID from the user terminal 5, the control unit establishes, when a device to which a connection is requested is logged in with the sub ID selected on the user terminal 5, a communication session between the device that is logged in and the user terminal 5 that is logged in. On the other hand, when the device to which a connection is requested is not logged in with the sub ID selected on the user terminal 5, the control unit causes the device to log in and, after the device is logged in, establishes a communication session between the device and the user terminal 5 that is logged in.

At the time of starting the relay of communication between the user terminal 5 and the device, the relay server 3 transmits, to the user terminal 5, a list of sub IDs of devices (device list) that are able to communicate with the user terminal 5. This causes a user using the user terminal to select one from the sub IDs displayed, thereby preventing the user from connecting an unrelated or inappropriate device and the user terminal 5. That is, the relay server 3 is able to appropriately relay communication between the device and the user terminal 5.

Further, in the relay server 3, the control unit establishes, only when the sub ID is selected, that is, there is a request to communicate with a predetermined device using the user terminal 5, a communication session between the device and the user terminal 5.

On the other hand, when the device that desires to establish a communication session is not logged in to the relay server 3, the control unit causes the device to log in and, after the device is logged in, establishes a communication session between the device and the user terminal 5.

Accordingly, the relay server 3 can minimize the number of devices that remain logged in, which makes it possible to reduce a load of the relay process on the relay server 3.

### 3. Other embodiment

Although one embodiment of the present invention has been described above, the present invention is not limited to the embodiment, and various modifications are possible without departing from the gist of the invention. In particular, the embodiments and alternative embodiments described in this specification may be optionally combined as necessary.

In each of the processes described with reference to the flowcharts and the like in the first embodiment, the process details of each step, the order of the steps, and the like may be optionally changed without departing from the gist of the invention.
(A) One automated warehouse system 1 may be provided with two or more one gateway devices. The number of gateway devices may be any number in accordance with, for example, the number of cameras and/or sensors provided in the automated warehouse system 1, the number of management servers of the automated warehouse system 1, and the like.
(B) For example, a communication session between these two gateway devices may be established via the relay server 3, for example, when communication between the gateway devices cannot be performed due to firewall settings. In this case, the relay server 3 may execute the above steps S61 to S65 on the two gateway devices to relay data transmission and reception between the two gateway devices.
(C) A device list including a sub ID may include information indicating whether a camera and/or a sensor corresponding to the sub ID is in a state of being able to communicate with a gateway device.

This makes it possible to confirm a device that is not yet able to communicate with the gateway device on the device list.

The present invention is widely applicable to a relay server that relays communication between devices included in a system.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

According to an embodiment a), a communication system comprises:
a user terminal (5);
a gateway device (19, 23) to which a to-be-connected device (CA, SE) is connected; and
a relay server (3) configured to relay communication between the user terminal (5) and the to-be-connected device (CA, SE), the relay server (3) including:
   a network interface (34) configured to communicate with the user terminal (5) and the to-be-connected device (CA, SE);
   a storage device (35) configured to store login information in which a user ID, a user type to which the user ID belongs, and a device ID of the to-be-connected device (CA, SE) belonging to the user type are stored in association with each other; and
   a control unit configured to:
      when the user terminal (5) performs a login,
         identify the user type to which the user ID used for the login belongs and the device ID belonging to the user type with reference to the login information, and
         transmit a list including the device ID thus identified to the user terminal (5) that is logged in; and
      when receiving selection of the device ID from the user terminal (5),
         establish, when the to-be-connected device (CA, SE) is logged in with the device ID selected on the user terminal (5), a communication session between the to-be-connected device (CA, SE) that is logged in and the user terminal (5) that is logged in, and
         request, when the to-be-connected device (CA, SE) is not logged in with the device ID selected on the user terminal (5), the gateway device (19, 23) to transmit a signal that causes the to-be-connected device (CA, SE) to log in and, after the to-be-connected device (CA, SE) is logged in, establish a communication session between the to-be-connected device (CA, SE) and the user terminal (5) that is logged in.

According to an embodiment b), in the communication system according to embodiment a), when the device ID of the to-be-connected device (CA, SE) that is not logged in is selected on the user terminal (5), the control unit is configured to transmit, to a gateway device (19, 23) to which the to-be-connected device (CA, SE) is connected, a login request signal that causes the to-be-connected device (CA, SE) to log in.

According to an embodiment c), in the communication system according to embodiment b), the control unit is configured to receive information on the to-be-connected device (CA, SE) connected to the gateway device (19, 23) from the gateway device (19, 23) and update, when the to-be-connected device (CA, SE) connected to the gateway device (19, 23) changes, the login information.

## Claims

1. A relay server (3) comprising:
a network interface (34) configured to communicate with a user terminal (5) and a to-be-connected device (CA, SE);
a storage device (35) configured to store login information in which a user ID, a user type to which the user ID belongs, and a device ID of the to-be-connected device (CA, SE) belonging to the user type are stored in association with each other; and
a control unit configured to:
when the user terminal (5) performs a login,
identify the user type to which the user ID used for the login belongs and the device ID belonging to the user type with reference to the login information, and
transmit a list including the device ID thus identified to the user terminal (5) that is logged in; and
when receiving selection of the device ID from the user terminal (5),
establish, when the to-be-connected device (CA, SE) is logged in with the device ID selected on the user terminal (5), a communication session between the to-be-connected device (CA, SE) that is logged in and the user terminal (5) that is logged in, and
cause, when the to-be-connected device (CA, SE) is not logged in with the device ID selected on the user terminal (5), the to-be-connected device (CA, SE) to log in and, after the to-be-connected device (CA, SE) is logged in, establish a communication session between the to-be-connected device (CA, SE) and the user terminal (5) that is logged in.

2. The relay server (3) according to claim 1, wherein when the device ID of the to-be-connected device (CA, SE) that is not logged in is selected on the user terminal (5), the control unit is configured to transmit, to a gateway device (19, 23) to which the to-be-connected device (CA, SE) is connected, a login request signal that causes the to-be-connected device (CA, SE) to log in.

3. The relay server (3) according to claim 2, wherein the control unit is configured to receive information on the to-be-connected device (CA, SE) connected to the gateway device (19, 23) from the gateway device (19, 23) and update, when the to-be-connected device (CA, SE) connected to the gateway device (19, 23) changes, the login information.

4. A communication system comprising:
a user terminal (5);
a gateway device (19, 23) to which a to-be-connected device (CA, SE) is connected; and
a relay server (3) according to one of claims 1 to 3, and configured to relay communication between the user terminal (5) and the to-be-connected device (CA, SE),
wherein the control unit is configured to request, when the to-be-connected device (CA, SE) is not logged in with the device ID selected on the user terminal (5), the gateway device (19, 23) to transmit a signal that causes the to-be-connected device (CA, SE) to log in and, after the to-be-connected device (CA, SE) is logged in, establish the communication session between the to-be-connected device (CA, SE) and the user terminal (5) that is logged in.

5. A method for establishing a communication session in a communication system including a user terminal (5), a gateway device (19, 23) to which a to-be-connected device (CA, SE) is connected, and a relay server (3) configured to relay communication between the user terminal (5) and the to-be-connected device (CA, SE), the method causing the relay server (3) to:
when the user terminal (5) performs a login,
identify a user type to which a user ID used for the login belongs and a device ID belonging to the user type with reference to login information, and
transmit a list including the device ID thus identified to the user terminal (5) that is logged in; and
when receiving selection of the device ID from the user terminal (5),
establish, when the to-be-connected device (CA, SE) is logged in with the device ID selected on the user terminal (5), a communication session between the to-be-connected device (CA, SE) that is logged in and the user terminal (5) that is logged in, and
request, when the to-be-connected device (CA, SE) is not logged in with the device ID selected on the user terminal (5), the gateway device (19, 23) to transmit a signal that causes the to-be-connected device (CA, SE) to log in and, after the to-be-connected device (CA, SE) is logged in, establish a communication session between the to-be-connected device (CA, SE) and the user terminal (5) that is logged in.

6. The method for establishing a communication session according to claim 5, further causing, when the device ID of the to-be-connected device (CA, SE) that is not logged in is selected on the user terminal (5), the relay server (3) to transmit, to the gateway device (19, 23) to which the to-be-connected device (CA, SE) is connected, a login request signal that causes the to-be-connected device (CA, SE) to log in.

7. The method for establishing a communication session according to claim 6, further causing the relay server (3) to receive information on the to-be-connected device (CA, SE) connected to the gateway device (19, 23) from the gateway device (19, 23) and update, when the to-be-connected device (CA, SE) connected to the gateway device (19, 23) changes, the login information.
